# EUROPEAN PATENT SPECIFICATION

(11) **EP 3 140 096 B1**
(45) Date of publication and mention of the grant of the patent: **10.07.2019**
(21) Application number: 15725423.6
(22) Date of filing: 05.05.2015
(51) Int. Cl.: B29C 44/34, B41M 5/26, C03C 23/00, B29L 31/00, B29K 101/12, B29K 55/02, B29K 25/00, B29K 23/00, B29K 27/06, B29K 33/00

(54) **METHOD FOR PRODUCING A HOUSEHOLD APPLIANCE COMPONENT AS WELL AS HOUSEHOLD APPLIANCE COMPONENT**
VERFAHREN ZUR HERSTELLUNG EINER HAUSHALTSGERÄTEKOMPONENTE SOWIE HAUSHALTSGERÄTEKOMPONENTE
PROCÉDÉ DE PRODUCTION DE COMPOSANT D'APPAREIL MÉNAGER AINSI QUE COMPOSANT D'APPAREIL MÉNAGER

(30) Priority: 07.05.2014 ES 201430668
(43) Date of publication of application: 15.03.2017
(73) Proprietor: BSH Hausgeräte GmbH, 81739 München (DE)
(72) Inventor: CLEMENTE OTEO, Maria Jose, E-50008 Zaragoza (ES); ESTER SOLA, Francisco Javier, E-50001 Zaragoza (ES); GOLDARACENA JACA, Martin, E-01192 Gazeta (Álava) (ES); MIMOSO FERNANDES, Carlos, E-31699 Olloki (Navarra) (ES); ORIOL LANGA, Luis, E-50015 Zaragoza (ES); URRUTIA ANGOS, David, E-50009 Zaragoza (ES); VILLAREAL CALVO, Luis, E-50018 Zaragoza (ES); VILLATE ROBLES, Ander, E-01006 Vitoria (ES)
(86) International application number: PCT/IB2015/053272
(87) International publication number: WO 2015/170250

(56) References cited:
- EP-A1- 2 072 478
- EP-A2- 0 469 982
- EP-A2- 2 388 121
- DE-A1-102010 030 539
- US-A- 3 627 858
- US-A- 5 273 698
- US-A- 5 273 698

## Description

The invention relates to a method for producing a household appliance component, in which a base part of the household appliance component is provided. A mark is generated with a laser on a top side of this base part, wherein foam is formed on the top side by means of the laser for the mark.

Furthermore, the invention relates to a household appliance component, which is produced by means of the corresponding method.

Document EP 2 072 478 A1 discloses a method and a household appliance component of such generic type, wherein the top side is formed of glass or ceramics, and wherein glass or ceramic foam is formed on the top side by means of the laser for the mark.

It is known that extensive processing of materials is allowed by means of laser. In this context, plastics can also be processed. The laser beam acts on the plastic material and it fuses it on the top side. By such approaches, marks can be generated, since thus for example dark plastics can for example be white discolored by this action of the laser beam. In this melt, as it is generated by the laser beam on the top side of the plastic, small gas bubbles form, which increase the volume such that plastic foam is virtually generated. The enclosed gas bubbles reflect the light in diffuse manner, whereby the processed area appears brighter than the surrounding material. It can also be provided that this mark projects or protrudes beyond the surface of the adjoining plastic, which is not foamed, in raised and thus tactile manner. Then, this is a foamed mark.

However, it is to be noted that especially such marks with the areas of the plastic foam are too high or too severely foamed and thereby have disadvantages.

It is the object of the present invention to provide a method and a household appliance component, by which or in which such plastic foam areas are functionally improved.

This object is solved by a method and a household appliance component according to the independent claims.

In a method according to the invention for producing a household appliance component, a base part of the household appliance component is provided. A mark is generated with a laser on a top side of the base part, wherein a foam area is formed on the top side by means of the laser for the mark. This base part is formed of plastic at least on the top side, but can also be completely made of plastic. Therein, the laser acts on the plastic such that a foam area is formed on the top side for this mark, which in particular then also presents the mark itself. In particular, by this approach, the mark is generated different in color from the plastic material not processed with the laser light.

A substantial idea of the invention is to be regarded in that after generation of the plastic foam area, it is reduced in its thickness and is increased in its density. By this post-processing of the generated plastic foam area, an undesirably severe foaming is again reduced such that an undesirably severe raised protrusion is avoided. However, it is in particular achieved thereby that the mechanical stability is substantially increased. Especially if the number and/or the size of the gas bubbles in the plastic foam area is relatively high or extensive by relatively severe foaming, the mechanical stability is restricted. By the invention, this is counteracted. Thereby, the reject rate of produced household appliance components can be considerably reduced also in the production process.

According to the invention the plastic foam area is processed with a compression element and the density thereof is increased by this specific and defined compression of the plastic area. Thus, by specific deformation, a more compact mark is provided, which is improved with regard to physical parameters, in particular the hardness and density.

Preferably, the compression element is provided with a plate-like compression surface, wherein this plate-like compression surface is provided with the size of the plastic foam area in terms of surface area. By this configuration, a particularly uniform force action on the entire plastic foam area is achieved such that here too a very uniform compression is performed. Thereby, a uniform densification is also achieved virtually over the entire size of the plastic foam area, which is particularly advantageous for the stability of this mark. Preferably, as the mark, at least one letter and/or at least one number and/or at least one symbol are generated. Thereby, for example names of the manufacturer and/or of the appliance type can be generated as the mark. However, symbols identifying an operating function of a household appliance, which this household appliance component has, can also be generated.

As the household appliance components, for example, control panels of a control front of a household appliance for caring pieces of laundry, such as for example of a washing machine.

Preferably, as the mark, at least one letter and/or at least one number and/or at least one symbol are generated. Thereby, for example names of the manufacturer and/or of the appliance type can be generated as the mark. However, symbols identifying an operating function of a household appliance, which this household appliance component has, can also be generated.

As the household appliance components, for example, control panels of a control front of a household appliance for caring pieces of laundry, such as for example of a washing machine or a clothes dryer or a washer-dryer, can be produced. However, control panels for a household appliance for preparing food such as for example a baking oven or a microwave cooking appliance can also be produced. Similarly, here, a control panel for a dishwasher can for example be produced. It is mentioned that the cited enumerations of examples for household appliance components and household appliances are not to be construed as exhaustive.

Preferably, the plastic foam area is generated protruding in raised manner beyond a surface of the top side of the plastic area adjoining the plastic foam area before compressing. The plastic foam area is then compressed such that a surface of this plastic foam area is flush with the surface of the adjoining plastic. By such a configuration, thus, any protrusion of the plastic foam area is eliminated such that the mark appears virtually completely integrated in the base part. With such a configuration, then, no protrusion and virtually no haptic perception exist any more, but merely in particular just a dissimilarity in terms of color of the mark with respect to the adjoining plastic not processed with the laser is generated.

Preferably, in an alternative configuration, not according to the invention, it is provided that the plastic foam area protrudes in raised manner beyond a surface of the top side of the plastic adjoining the plastic foam area before reducing its thickness, and the plastic foam area is reduced in its thickness such that a surface of the plastic foam area is flush with the surface of the adjoining plastic. In this configuration, substantial attention is directed to the fact that a thickness reduction occurs, which then results in a flush configuration with the adjoining surfaces of the plastic, wherein here the generation of a higher density of the plastic foam area then does not come to the fore.

Preferably, in this alternative approach, not according to the invention, the plastic foam area is abraded and/or planed off and/or polished up to the level of the surface of the adjoining plastic. By this approach, the plastic foam material is not undesirably ablated too deep.

The abrasion and/or planning off and/or polishing also allow an extremely precise material ablation in this context such that deep digging is not effected especially also on the then relatively instable and fragile structure of the plastic foam area.

Preferably, a cover layer is applied at least on the surface of the plastic foam area. By this additional coating, the plastic foam area is protected. Especially if an action on the plastic foam area occurs by the compression or also the material ablation in particular by abrading or planning off or polishing, then, a corresponding protection is formed afterwards by this cover layer. By this, then, a mechanically very stable structure can also again be generated with suitable material selection.

Preferably, as the cover layer, a transparent material is applied. For example, it can be a varnish. However, other materials can also be used for the cover layer.

Preferably, the cover layer is formed as a scratch-resistant layer. Besides a high mechanical stability of this cover layer, then, the occurrence of scratches or indentations or the like is also additionally avoided. Thereby, the generated mark remains always and permanently well visible, and moreover, a high quality impression is also permanently given.

It is also particularly advantageous if the plastic foam area is subjected to a thermal treatment. By such a specific and defined heating, the hardness of the plastic foam area and thus also of the mark is again increased.

It is particularly advantageous if the thermal treatment continues in a period of time between four minutes and six minutes, preferably five minutes, wherein here temperature values between preferably 75° C and 85° C, in particular of 80° C, are adjusted.

Furthermore, the invention relates to a household appliance component, which is produced according to the method according to the invention or an advantageous configuration thereof. The household appliance component includes a base part formed of plastic on a top side. Then, the at least one mark is also generated there. The household appliance component can for example be a control panel of a household appliance. In this context, it then also constitutes a front panel.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone without departing from the scope of the invention. Thus, implementations are also to be considered as encompassed and disclosed by the invention, which are not explicitly shown in the figures and explained, but arise from and can be produced by separated feature combinations from the explained implementations, all falling within the scope of the appended claims.

Below, embodiments of the invention are explained in more detail based on schematic drawings. There show:
- Fig. 1: a schematic sectional illustration through an embodiment of a household appliance component according to the invention in a specific manufacturing state;
- Fig. 2: the household appliance component according to Fig. 1 in a manufacturing state subsequent to Fig. 1;
- Fig. 3: the household appliance component according to Fig. 1 and Fig. 2 in a manufacturing state subsequent to Fig. 2;
- Fig. 4: a schematic sectional illustration of a further embodiment of a household appliance component in a specific manufacturing state; and
- Fig. 5: a schematic sectional illustration of a further example of a household appliance component not according to the invention in a specific manufacturing state.

In the figures, identical or functionally identical elements are provided with the same reference characters.

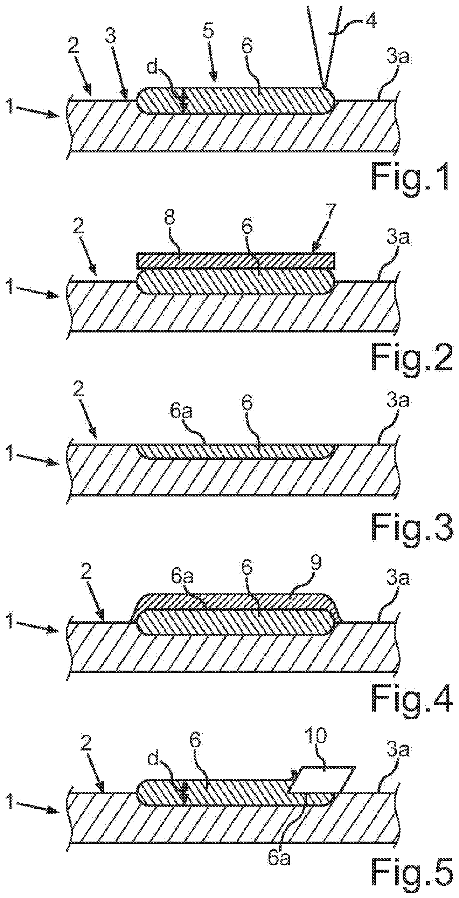

In Fig. 1, in a sectional illustration, a household appliance component 1 is shown, which can for example be a control panel. The household appliance component 1 includes a base body or a base part 2, which is at least partially, preferably completely formed of plastic in the embodiment. On a top side 3 of the base part 2, a mark 5 is generated by means of a laser 4. Therein, the laser 4 generates fusing of the plastic material with its laser light, wherein a plastic foam area 6 is then generated thereby, which protrudes to the top in raised manner with respect to a surface 3a. By this approach, the mark 5 is highlighted optically different from the plastic material, which is not processed by the laser 4.

In a following step, then, after generating this plastic foam area 6, it is compressed and thus increased in its density. This is illustrated in Fig. 2, wherein a compression element 7 with a plate-shaped compression surface 8 is provided to this, which preferably has the size of the surface area of the plastic foam area 6. By this compression element 7, which acts on the plastic foam area 6 with a corresponding force, it is compressed, wherein this is effected in an advantageous implementation according to the illustration in Fig. 3 such that a surface 6a of the compressed plastic foam area 6 is then flush with the surface 3a of the plastic material, which has neither been processed with the laser 4 nor with the compression element 7. An example of the pressing process is to apply a pressure between 50 and 1500 kg/m2 during 2 seconds.

Then, it can additionally also be provided that this plastic foam area 6 is completely covered with a separate cover layer, which is preferably a scratch-resistant layer. This cover layer is preferably transparent.

In a further implementation, it can also be provided that the plastic foam area 6 is only partially compressed and/or reduced in its thickness and therein still slightly protrudes in raised manner beyond the surface 3a to a certain extent. Here, a cover layer 9 is then also exemplarily formed, which coats or covers the entire plastic foam area 6 from the top. Both in the implementation as it was then produced until Fig. 3 or else also in the implementation as it was then produced until Fig. 4, a specific thermal treatment can also additionally be effected. Therein, the plastic foam area 6 is subjected to a temperature with a temperature value between 75° C and 85° C, preferably of 80° C, preferably for a duration between four minutes and six minutes, preferably five minutes. In the case of the heat treatment, exposure of the foamed mark to a temperature of 80°C for 2 minutes could lead to a reduction in the layer thickness and an increase in the resistance to scratch. Also, a short exposure to an intense flame (similar to the ones used as a pretreatment in tampo-printing applications) shows similar results.

In Fig. 5, in a schematic sectional illustration, a further example of a household appliance component 1 is shown, in which the plastic foam area 6 has been generated by means of the laser 4. Subsequent thereto, here, preferably, only the thickness d of the plastic foam area 6 is then reduced, but the density is not increased. This reduction of the thickness d is preferably generated with an ablation element 10, which abrades or planes off an upper part of the plastic foam area 6 or ablates it by polishing. Preferably, this is also again effected to the effect that a surface 6a of the plastic foam area 6, as it is present after processing with an element 10, is then flush with the surface 3a.

Here too, a cover layer 9 can be additionally formed and/or a thermal treatment as it was explained above can be effected.

The cover layer 9 can for example also be effected via a plasma deposition, for example an atmospheric pressure plasma deposition, of a transparent hard material or by varnishing.

In the example according to Fig. 5, preferably, that partial area of the plastic foam area, which is even more fragile or more porous than the area located deeper, is ablated such that here then only the lower partial area more stable compared to the upper partial area of the plastic foam area 6 remains.

### List of reference characters

- 1: Household appliance component
- 2: Base part
- 3: Topside
- 3a: Surface
- 4: Laser
- 5: Mark
- 6: Plastic foam area
- 6a: Surface
- 7: Compression element
- 8: Compression surface
- 9: Cover layer
- 10: Ablation element
- d: Thickness

## Claims

1. Method for producing a household appliance component (1), in which a base part (2) of the household appliance component (1) is provided, and a mark (5) is generated with a laser (4) on a top side (3) of the base part (2), wherein a foam area (6) is formed on the top side (3) by means of the laser (4) for the mark (5), **characterized in that** the base part (2) is formed of plastic at least on the top side (3), and the foam area (6) is reduced in its thickness (d) and increased in its density afterwards by being compressed with a compression element (7).

2. Method according to claim 1, **characterized in that** the compression element (7) has a plate-shaped compression surface (8), which is provided with the corresponding size as the foam area (6) in terms of surface area.

3. Method according to any one of the preceding claims, **characterized in that** the foam area (6) protrudes in raised manner beyond a surface (3a) of the top side (3) of the plastic adjoining the foam area (6) before compressing and the foam area (6) is compressed such that a surface (6a) of the foam area (6) is formed flush with the surface (3a) of the adjoining plastic.

4. Method according to any one of the preceding claims, **characterized in that** a cover layer (9) is applied at least on the surface (6a) of the foam area (6).

5. Method according to claim 4, **characterized in that** the cover layer (9) is formed as a scratch-resistant layer.

6. Method according to any one of the preceding claims, **characterized in that** the foam area (6) is thermally treated, and is subjected to a temperature between 75°C and 85°C.

7. Method according to claim 6, **characterized in that** the foam area (6) is thermally treated for a period of time between 4 min. and 6 min.

8. Household appliance component (1), which is produced according to a method according to any one of the preceding claims.

## Patentansprüche

1. Verfahren zur Herstellung einer Haushaltsgerätekomponente (1), bei dem ein Basisteil (2) einer Haushaltsgerätekomponente (1) bereitgestellt wird und mit einem Laser (4) auf einer Oberseite (3) des Basisteils (2) eine Markierung (5) erzeugt wird, wobei auf der Oberseite (3) mittels des Lasers (4) ein Schaumstoffbereich (6) für die Markierung (5) gebildet wird, **dadurch gekennzeichnet, dass** das Basisteil (2) zumindest auf der Oberseite (3) aus Kunststoff gebildet ist und der Schaumstoffbereich (6) in seiner Dicke (d) reduziert wird und hinterher durch Zusammendrücken mit einem Druckelement (7) in seiner Dichte erhöht wird.

2. Verfahren nach Anspruch 1, **dadurch gekennzeichnet, dass** das Druckelement (7) eine plattenförmige Druckfläche (8) hat, die flächenmäßig mit der entsprechenden Größe wie der Schaumstoffbereich (6) versehen ist.

3. Verfahren nach einem der vorhergehenden Ansprüche, **dadurch gekennzeichnet, dass** der Schaumstoffbereich (6) hinter einer Oberfläche (3a) der Oberseite (3) des Kunststoffs, der an den Schaumstoffbereich (6) anstößt, vor dem Zusammendrücken erhaben vorsteht und der Schaumstoffbereich (6) derart zusammengedrückt wird, dass eine Oberfläche (6a) des Schaumstoffbereichs (6) bündig mit der Oberfläche (3a) des anstoßenden Kunststoffs ausgebildet ist.

4. Verfahren nach einem der vorhergehenden Ansprüche, **dadurch gekennzeichnet, dass** zumindest auf der Oberfläche (6a) des Schaumstoffbereichs (6) eine Deckschicht (9) aufgebracht wird.

5. Verfahren nach Anspruch 4, **dadurch gekennzeichnet, dass** die Deckschicht (9) als eine kratzfeste Schicht ausgebildet ist.

6. Verfahren nach einem der vorhergehenden Ansprüche, **dadurch gekennzeichnet, dass** der Schaumstoffbereich (6) thermisch erhitzt wird und einer Temperatur zwischen 75 °C und 85 °C ausgesetzt wird.

7. Verfahren nach Anspruch 6, **dadurch gekennzeichnet, dass** der Schaumstoffbereich (6) für einen Zeitraum zwischen 4 Min. und 6. Min. thermisch erhitzt wird.

8. Haushaltsgerätekomponente (1), die nach einem Verfahren nach einem der vorhergehenden Ansprüche hergestellt wird.

## Revendications

1. Procédé de production d'un composant d'appareil ménager (1), dans lequel une partie de base (2) du composant d'appareil ménager (1) est fournie et une marque (5) est effectuée au laser (4) sur un côté supérieur (3) de la partie de base (2), dans lequel une zone de mousse (6) est formée sur le côté supérieur (3) au moyen du laser (4) pour la marque (5), **caractérisé en ce que** la partie de base (2) est formée de plastique au moins sur le côté supérieur (3) et la zone de mousse (6) est réduite au niveau de son épaisseur (d) et augmentée au niveau de sa densité en étant compressée avec un élément de compression (7).

2. Procédé selon la revendication 1, **caractérisé en ce que** l'élément de compression (7) possède une surface de compression (8) en forme de plaque, dotée de la taille correspondante à la zone de mousse (6) en termes de zone surfacique.

3. Procédé selon l'une quelconque des revendications précédentes, **caractérisé en ce que** la zone de mousse (6) fait saillie de façon élevée par-delà une surface (3a) du côté supérieur (3) du plastique adjacent à la zone de mousse (6) avant compression et la zone de mousse (6) est comprimée de sorte qu'une surface (6a) de la surface de mousse (6) est formée de façon affleurante à la surface (3a) du plastique adjacent.

4. Procédé selon l'une quelconque des revendications précédentes, **caractérisé en ce qu'**une couche de couverture (9) est appliquée au moins sur la surface (6a) de la zone de mousse (6).

5. Procédé selon la revendication 4, **caractérisé en ce que** la couche de couverture (9) est constituée sous la forme d'une couche résistante aux rayures.

6. Procédé selon l'une quelconque des revendications précédentes, **caractérisé en ce que** la zone de mousse (6) est traitée thermiquement et est soumise à une température entre 75°C et 85°C.

7. Procédé selon la revendication 6, **caractérisé en ce que** la zone de mousse (6) est traitée thermiquement durant un laps de temps de 4 min. à 6 min.

8. Composant d'appareil ménager (1) produit conformément à un procédé selon l'une quelconque des revendications précédentes.
